# EUROPEAN PATENT APPLICATION

(11) **EP 4 542 126 A1**
(43) Date of publication of application: **23.04.2025**
(21) Application number: 23823893.5
(22) Date of filing: 12.06.2023
(51) Int. Cl.: F24F 6/04, B32B 3/06, B32B 5/18, B32B 27/30

(54) **HUMIDIFICATION ELEMENT AND HUMIDIFIER**

(30) Priority: 15.06.2022 JP 2022096880; 31.05.2023 JP 2023090139
(71) Applicant: Daicel Corporation, Osaka-shi, Osaka 530-0011 (JP); DAIKIN INDUSTRIES, LTD., Osaka-shi, Osaka 530-0001 (JP)
(72) Inventor: NAKAZAWA, Takema, Osaka-Shi, Osaka 530-0001 (JP); KASAI, Masaya, Osaka-Shi, Osaka 530-0001 (JP); SUEOKA, Takahisa, Osaka-Shi, Osaka 530-0001 (JP); OKUBO, Eisaku, Osaka-Shi, Osaka 530-0001 (JP); TANAKA, Hidekazu, Osaka-Shi, Osaka 530-0001 (JP); MAETANI, Shinji, Tokyo 108-8230 (JP); NISHIO, Naotaka, Tokyo 108-8230 (JP); SAKAKIBARA, Takahiro, Tokyo 108-8230 (JP); MIZUTA, Tomoya, Tokyo 108-8230 (JP); SAKATA, Yumi, Tokyo 108-8230 (JP)
(74) Representative: Grünecker Patent- und Rechtsanwälte PartG mbB
(86) International application number: PCT/JP2023/021739
(87) International publication number: WO 2023/243603

(57) **Abstract**

Provided is a humidification element having improved humidification performance. The present disclosure provides a humidification element 1 including a laminate 10 including a porous reinforcing material 11 and a moisture-permeable membrane 12 laminated on at least one surface 11a of the porous reinforcing material 11, and a frame 30, wherein the laminate 10 is disposed on an air passage side of the frame 30. The laminate 10 preferably forms a bag-shaped water-holding container in such a manner as to cover the air passage side of the frame 30. In the laminate 10, the moisture-permeable membrane 12 is preferably disposed on the frame 30 side of the porous reinforcing material 11.

## Description

### Technical Field

The present disclosure relates to a humidification element and a humidifier. The present application claims priority based on JP 2022-096880 filed in Japan on June 15, 2022, and JP 2023-090139 filed in Japan on May 31, 2023, the contents of which are incorporated herein by reference.

### Background Art

A moisture-permeable membrane-type humidifier has a high humidification performance as compared with a known humidifier including an evaporation plate, and enables clean humidification by suppressing scattering of impurities. Meanwhile, such a moisture-permeable membrane-type humidifier needs to use a special shape and material for exhibiting moisture permeability, and thus poses a cost problem. The humidifier also poses a problem in long-term reliability due to deterioration of function caused by deformation or breakage of the moisture-permeable membrane and adhesion and deposition of scale components. Thus, the humidifier has been repeatedly improved for cost reduction with maintenance of long-term humidification performance.

For example, Patent Document 1 discloses a humidification element in which a thin plate-like structure is bonded to the outside of a thin bag-shaped moisture-permeable membrane. The use of the humidification element prevents swelling of the moisture-permeable membrane. The humidification element does not require an additional member, and humidification elements can be easily stacked for use. Thus, the humidification element can reduce cost and can stably exhibit moisture permeation performance for a long period of time.

### Citation List

### Patent Document

Patent Document 1: JP 2003-97831 A

### Summary of Invention

### Technical Problem

However, according to Patent Document 1, the bag-shaped moisture-permeable membrane is bonded to the inside of the thin plate-like member, and an outlet of water vapor is blocked on a bonding surface of the thin plate-like member. Thus, a region from which water vapor is emitted is limited to a hole of the thin plate-like member, which causes a problem that the moisture permeation performance cannot be sufficiently exhibited.

Since the moisture-permeable membrane cannot sufficiently exhibit the moisture permeation performance as described above, the humidification element needs to be used in an area larger than the area of the moisture-permeable membrane for exhibiting the sufficient humidification performance. Thus, there is a disadvantage that the size of the humidifier is required to be increased. There is also a problem that the cost increases with an increase in the size of the humidifier.

Thus, an object of the present disclosure is to provide a humidification element having excellent humidification performance.

### Solution to Problem

As a result of intensive efforts to solve the above problems, the inventors of the present disclosure have found that the above problems can be solved by a humidification element including a frame, and a laminate having a porous reinforcing material and a moisture-permeable membrane laminated on at least one surface of the porous reinforcing material, wherein the laminate is disposed on an air passage side of the frame. The present disclosure relates to what has been completed based on these findings.

Accordingly, the present disclosure provides a humidification element including a frame, and a laminate including a porous reinforcing material and a moisture-permeable membrane laminated on at least one surface of the porous reinforcing material, wherein the laminate is disposed on an air passage side of the frame.

Since the laminate is disposed on the air passage side of the frame in the humidification element, water vapor diffuses throughout the laminate even when a region of the laminate capable of absorbing liquid water as water vapor is only a part of the laminate, and a wide region of the surface on the air passage side of the laminate can act as a water vapor volatilization surface. Thus, an effective area of the moisture-permeable membrane of the laminate can be increased, and high moisture permeation performance can be exhibited.

In the humidification element, the laminate preferably forms a bag-shaped water-holding container that covers the air passage side of the frame.

In the laminate, the moisture-permeable membrane is preferably disposed on the frame side of the porous reinforcing material. With the above-described configuration, adhesion and deposition of scale components can be suppressed, and thus moisture permeation performance can be easily exhibited over a long period of time.

The moisture-permeable membrane is preferably a non-porous membrane. When the moisture-permeable membrane is a non-porous membrane, scattering of impurities can be easily suppressed.

Preferably, the non-porous membrane contains a thermoplastic resin including a cationic moiety, and the cationic moiety contains a group containing an ammonium ion or a group capable of forming an ammonium ion. When the cationic moiety contains a group containing an ammonium ion or a group capable of forming an ammonium ion, the non-porous membrane can exhibit a bactericidal action, and thus adhesion and deposition of saprophytes or the like can be suppressed.

Preferably, the non-porous membrane contains a thermoplastic resin including a hydrophilic moiety, and the hydrophilic moiety contains a constituent unit represented by Formula (1) described below. When the non-porous membrane has the hydrophilic moiety of the constituent unit, a water-conducting path can be formed in the moisture-permeable membrane, and moisture permeability can be easily exhibited. 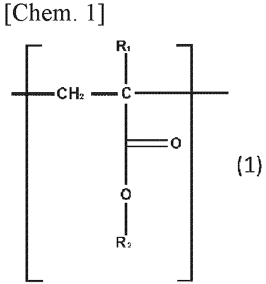 (R₁ and R₂ each independently represent a hydrogen atom or a methyl group.)

Preferably, the non-porous membrane contains a thermoplastic resin including a hydrophobic moiety, and the hydrophobic moiety contains a constituent unit represented by Formula (2) and/or Formula (3) described below. When the non-porous membrane has the hydrophobic moiety of the constituent unit, the surface of the non-porous membrane can exhibit water repellency. 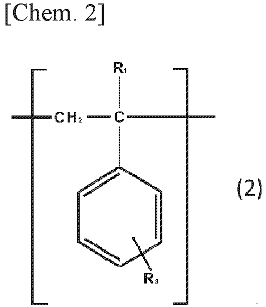 (R₁ represents a hydrogen atom or a methyl group, and R₃ represents a hydrogen atom or an alkyl group having from 1 to 2 carbons.) 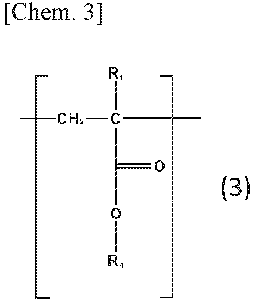 (R₁ represents a hydrogen atom or a methyl group, and R₄ represents a branched alkyl group having 3 or more carbons.)

The moisture-permeable membrane is preferably a hydrophilic porous membrane.

The hydrophilic porous membrane and the porous reinforcing material preferably have different thicknesses.

In the humidification element, the laminate and the frame are preferably bonded to each other by adhesion or fusion.

In the humidification element, the laminate and the frame are preferably bonded to each other with an adhesive.

Preferably, the moisture-permeable membrane is coated to cover at least one surface of the porous reinforcing material.

The present disclosure also provides a humidifier including the humidification element.

The present disclosure also provides an air conditioner including the humidifier.

The present disclosure also provides a ventilator including the humidifier.

The present disclosure also provides an air purifier including the humidifier.

### Advantageous Effects of Invention

The humidification element of the present disclosure can improve humidification performance. Therefore, when the humidification element of the present disclosure is used in a humidifier, the humidifier can be downsized. Thus, the humidification element is preferably used in a moisture-permeable membrane-type humidifier.

### Brief Description of Drawings

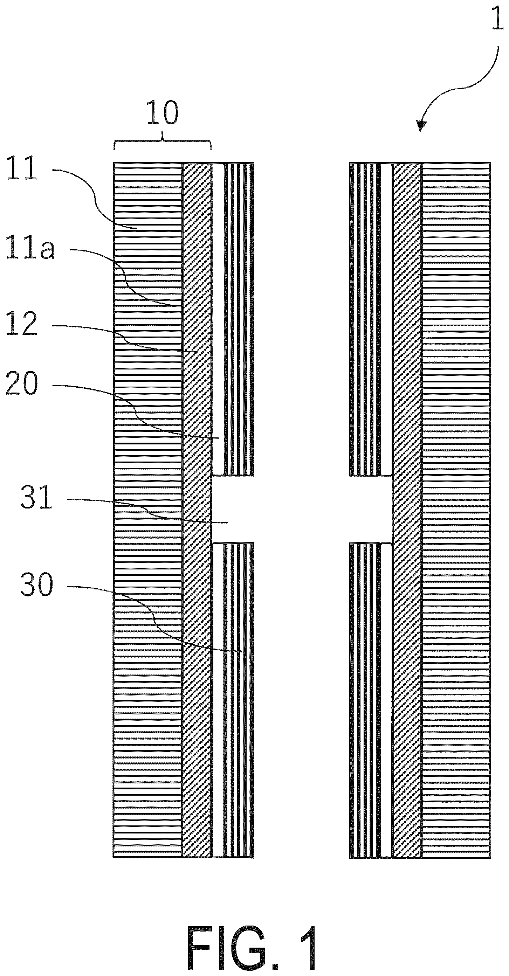

FIG. 1 is a cross-sectional schematic view illustrating an embodiment of the humidification element of the present disclosure.

### Description of Embodiments

### [Humidification element]

A humidification element according to an embodiment of the present disclosure at least includes a frame, and a laminate including a porous reinforcing material and a moisture-permeable membrane provided on at least one surface of the porous reinforcing material. The laminate is disposed on an air passage side of the frame. In the present disclosure, a side of the humidification element where water flows is referred to as "water passage side", and a side of the humidification element where air flows is referred to as "air passage side". The moisture-permeable membrane may be provided on one surface or both surfaces of the porous reinforcing material.

A humidification element according to another embodiment of the present disclosure at least includes a frame, and a laminate including a porous reinforcing material and a moisture-permeable membrane provided on at least one surface of the porous reinforcing material, in which the laminate preferably forms a bag-shaped water-holding container in such a manner as to cover the frame.

The humidification element is preferably provided with a water supply port and a water discharge port. The water supply port and the water discharge port may be provided in advance during production of the frame.

FIG. 1 is a sectional schematic view illustrating an embodiment of a humidification element of the present disclosure. A humidification element 1 includes a frame 30 and a laminate 10 bonded to the air passage side of the frame 30. The frame 30 has a hole 31 communicating with the outside. The laminate 10 includes a porous reinforcing material 11 and a moisture-permeable membrane 12 provided on one surface 11a of the porous reinforcing material 11. The laminate 10 is bonded via an adhesive 20 in such a manner as to cover the hole 31 of the frame 30.

In the humidification element, since the laminate is disposed on the air passage side of the frame, water vapor can diffuse into the laminate even when a region where the moisture-permeable membrane is in contact with the water passage side, that is, a region capable of absorbing liquid water as water vapor from the hole of the frame, is only a part of the moisture-permeable membrane. Thus, a wide region of the surface of the laminate on the air passage side can act as a water vapor volatilization surface, the effective area of the moisture-permeable membrane can be increased, and high moisture permeation performance can be exhibited.

In the laminate, the moisture-permeable membrane is preferably disposed on the frame side of the porous reinforcing material. In the humidification element 1 illustrated in FIG. 1, the moisture-permeable membrane 12 is disposed on the frame 30 side of the porous reinforcing material 11 and is bonded to the frame 30 in such a manner as to close the hole 31 on the side opposite to the porous reinforcing material 11. The above-described configuration makes liquid water come into contact with the moisture-permeable membrane, and adhesion and deposition of scale components can be suppressed. Thus, the moisture permeation performance can be easily exhibited over a long period of time.

### <Frame>

The humidification element includes the aforementioned frame. The frame is preferably disposed on the water passage side of the laminate, and it is more preferable that a bag-like shape can be formed by bonding of the laminate. The frame may be, for example, one plate-like frame, may be a bag-shaped structure formed by bending of one frame, or may be a bag-shaped structure formed by bonding of two or more frames. That is, the laminate may be disposed on both sides of the plate-like frame, or the laminate may be disposed in such a manner as to cover the air passage side of the bag-shaped frame.

The outer shape of the frame is not particularly limited, but is preferably a substantially rectangular parallelepiped shape from the viewpoint of efficient disposition of the humidification element.

The frame is preferably made of a material having rigidity. Examples of the material include resins, such as ABS, polyethylene, polypropylene, nylon, POM, PPS, polyvinyl chloride, acrylic resin, and polycarbonate, and metals and alloy materials, such as aluminum, stainless steel, and titanium.

The method for producing the frame is not particularly limited. However, when a resin is used as the material of the frame, the frame is preferably produced by extrusion molding or injection molding. The hole may be formed by punching out the produced frame, may be formed by using two or more frames, or may be provided in advance by using a mold for forming the hole.

### <Laminate>

The humidification element includes a laminate including a porous reinforcing material and a moisture-permeable membrane formed on at least one surface of the porous reinforcing material.

### (Moisture-permeable membrane)

The moisture-permeable membrane is a membrane that does not allow liquid water to pass therethrough and allows only water vapor to pass therethrough. The moisture-permeable membrane may be a non-porous membrane or a porous membrane. In the present disclosure, a membrane in which only a pore having a size of 50 nm or less formed in the moisture-permeable membrane is confirmed by SEM observation is defined as a non-porous membrane. When a plurality of pores having a size of more than 50 nm can be confirmed, the membrane is defined as a porous membrane.

The non-porous membrane preferably contains a thermoplastic resin to absorb moisture. The thermoplastic resin preferably has a hydrophilic moiety. The thermoplastic resin preferably has a hydrophobic moiety to form a water-conducting path in the non-porous membrane while imparting water repellency to the surface of the non-porous membrane. Thus, the thermoplastic resin preferably has both a hydrophilic moiety and a hydrophobic moiety. It is presumed that when the non-porous membrane has a structure in which the hydrophilic moiety and the hydrophobic moiety are phase-separated, the hydrophilic moiety functions as a water-conducting path, and a larger amount of water vapor can be permeated, whereby more excellent moisture permeability is achieved.

Examples of the thermoplastic resin include acrylic resins, cellulose resins, polyester resins such as polybutylene terephthalate, polyether resins, polyurethane resins, polyvinyl chloride resins, polyethylene, polystyrene resins, polyamide resins, polyacetal resins, polycarbonate resins, polyphenylene sulfide resins, polyether ether ketone, polyimide resins, polytetrafluoroethylene resins, polycaprolactone, and polylactic acid.

Since the thermoplastic resin preferably has a hydrophilic moiety and a hydrophobic moiety as described above, the thermoplastic resin is preferably a thermoplastic copolymer containing different monomer components.

The hydrophilic moiety is preferably composed of a unit of a monomer (a) containing a hydrophilic functional group in a side chain (hereinafter referred to as monomer (a)) among the constituent units of the copolymer. The hydrophobic moiety is preferably composed of a unit of a monomer (b) containing a hydrophobic functional group in a side chain (hereinafter referred to as monomer (b)). The hydrophilic moiety and the hydrophobic moiety are preferably formed in the copolymer. In the non-porous membrane, the copolymer may retain a core-shell structure in which a hydrophobic moiety is formed inside and a hydrophilic moiety is formed outside. In this case, the hydrophilic moiety and the hydrophobic moiety may be formed by a core portion and a shell portion of two or more adjacent copolymers. The copolymer may have a core-shell structure before formation of the non-porous membrane, and may not retain the core-shell structure at the time of forming the non-porous membrane.

The copolymer preferably contains a structural unit derived from the monomer (a) as a portion constituting the hydrophilic moiety. Examples of the monomer (a) include a glycidyl group-containing monomer, a hydrolyzable silyl group-containing monomer, an acetoacetyl group-containing monomer, a hydroxyl group-containing monomer, a carboxy group-containing monomer, methyl (meth)acrylate, and a monomer having a cationic functional group described below. Among them, the monomer (a) is preferably a carboxy group-containing monomer, methyl (meth)acrylate, and a monomer having a cationic functional group described below. One type of the aforementioned monomers (a) may be used alone, or two or more types thereof may be used in combination. In the present specification, "(meth)acryl" represents at least one of "acryl" and "methacryl".

Examples of the glycidyl group-containing monomer include glycidyl (meth)acrylate and glycidyl (meth)allyl ether.

Examples of the hydrolyzable silyl group-containing monomer include vinyl silyl group-containing monomers such as vinyltrimethoxysilane, vinyltriethoxysilane, vinyltris(β-methoxyethoxy)silane, and vinylmethyldimethoxysilane; and (meth)acryloxy silyl group-containing monomers such as γ-(meth)acryloxypropyltrimethoxysilane, γ-(meth)acryloxypropylmethyldimethoxysilane, γ-(meth)acryloxypropyltriethoxysilane, and γ-(meth)acryloxypropylmethyldiethoxysilane.

Examples of the acetoacetyl group-containing monomer include diacetoacetic acid allyl ester, acetoacetoxyethyl (meth)acrylate, acetoacetoxyethyl crotonate, acetoacetoxypropyl (meth)acrylate, acetoacetoxypropyl crotonate, and 2-cyanoacetoacetoxyethyl (meth)acrylate.

Examples of the hydroxyl group-containing monomer include hydroxyl group-containing (meth)acrylates such as 2-hydroxyethyl (meth)acrylate, hydroxypropyl (meth)acrylate, and 4-hydroxybutyl (meth)acrylate.

Examples of the carboxy group-containing monomer include crotonic acid, maleic acid, acid anhydride monomers such as maleic anhydride, fumaric acid, citraconic acid, glutaconic acid, itaconic acid, acrylamide N-glycolic acid, cinnamic acid, and (meth)acrylic acid.

The monomer (a) is particularly preferably methyl (meth)acrylate and/or (meth)acrylic acid, that is, the hydrophilic moiety preferably includes a constituent unit represented by Formula (1) described below. 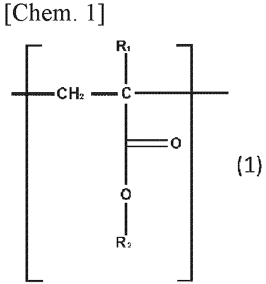 (R₁ and R₂ each independently represent a hydrogen atom or a methyl group.)

The content proportion of the monomer (a) is preferably from 20 mol% to 70 mol%, more preferably from 30 mol% to 70 mol%, and still more preferably from 40 mol% to 60 mol% relative to the entire monomer components constituting the copolymer. Adjusting the content proportion of the monomer (a) within this range makes it possible to form a hydrophilic moiety in the non-porous membrane to easily form a water-conducting path, and the non-porous membrane has more excellent moisture permeability.

The copolymer preferably contains a structural unit derived from the monomer (b) as a portion constituting the hydrophobic moiety. The monomer (b) is not particularly limited, but preferably contains a hydrocarbon group having 2 or more carbons. More preferred examples of the monomer (b) include (meth)acrylic acid esters having a hydrocarbon group having 2 or more carbons. One type of the aforementioned monomers (b) may be used alone, or two or more types thereof may be used in combination.

Examples of the hydrocarbon group having 2 or more carbons include an aliphatic hydrocarbon group, an alicyclic hydrocarbon group, an aromatic hydrocarbon group, and a group in which two or more of these groups are bound.

Examples of the aliphatic hydrocarbon group include an alkyl group, an alkenyl group, and an alkynyl group. Examples of the alkyl group include linear or branched alkyl groups such as an ethyl group, a propyl group, an isopropyl group, a butyl group, an isobutyl group, a hexyl group, an octyl group, an isooctyl group, a decyl group, a dodecyl group, and a stearyl group. Examples of the alkenyl group include linear or branched alkenyl groups such as a vinyl group, an allyl group, a methallyl group, a 1-propenyl group, an isopropenyl group, a 1-butenyl group, a 2-butenyl group, a 3-butenyl group, a 1-pentenyl group, a 2-pentenyl group, a 3-pentenyl group, a 4-pentenyl group, and a 5-hexenyl group. Examples of the alkynyl group include linear or branched alkynyl groups such as an ethynyl group and a propynyl group.

Examples of the alicyclic hydrocarbon group include cycloalkyl groups having from 3 to 12 carbons, such as a cyclopropyl group, a cyclobutyl group, a cyclopentyl group, a cyclohexyl group, and a cyclododecyl group; cycloalkenyl groups having from 3 to 12 carbons, such as a cyclohexenyl group; and bridged cyclic hydrocarbon groups having from 4 to 15 carbons, such as a bicycloheptanyl group and a bicycloheptenyl group.

Examples of the aromatic hydrocarbon group include aryl groups having from 6 to 14 carbons (in particular, aryl groups having from 6 to 10 carbons), such as a phenyl group and a naphthyl group.

The hydrocarbon group having 2 or more carbons is preferably an aliphatic hydrocarbon group and an aromatic hydrocarbon group, and more preferably a linear or branched alkyl group and an aromatic hydrocarbon group.

In particular, the monomer (b) is preferably, for example, a monomer capable of forming a constituent unit described in the following Formula (2) and/or the following Formula (3). That is, the hydrophobic moiety preferably contains a constituent unit represented by the following Formula (2) and/or the following Formula (3). 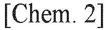 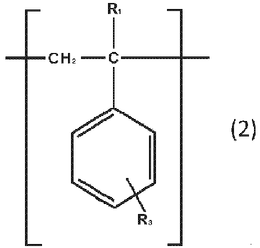 (R₁ represents a hydrogen atom or a methyl group, and R₃ represents a hydrogen atom or an alkyl group having from 1 to 2 carbons.) 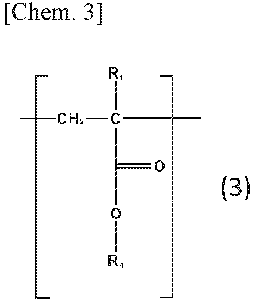 (R₁ represents a hydrogen atom or a methyl group, and R₄ represents a branched alkyl group having 3 or more carbons.)

In Formula (2), R₃ may be bonded at any position of the hydrocarbon constituting the benzene ring, and examples of the monomer capable of forming the constituent unit represented by Formula (2) include styrene, α-methylstyrene, p-methylstyrene, and p-ethylstyrene.

Examples of the monomer capable of forming the constituent unit represented by Formula (3) include isopropyl (meth)acrylate, isobutyl (meth)acrylate, tert-butyl (meth)acrylate, and 2-ethylhexyl (meth)acrylate.

The content proportion of the monomer (b) is preferably from 20 mol% to 70 mol%, more preferably from 30 mol% to 70 mol%, and still more preferably from 40 mol% to 60 mol% relative to the entire monomer components constituting the copolymer. Adjusting the content proportion of the monomer (b) within this range makes it possible to form a hydrophobic moiety in the non-porous membrane and to easily form a water-conducting path while exhibiting water repellency, and the non-porous membrane has more excellent moisture permeability.

The thermoplastic resin preferably has a cationic moiety. In this case, the thermoplastic resin may have a cationic moiety in the hydrophilic moiety and/or the hydrophobic moiety, or may have a cationic moiety in a portion other than these moieties. The thermoplastic resin preferably has a cationic moiety in the hydrophilic moiety. The cationic moiety is preferably a cationic functional group or a group capable of forming a cationic functional group. The group capable of forming a cationic functional group refers to a group that does not have a cationic functional group at the stage of the thermoplastic resin but generates a cationic functional group at the stage of forming the non-porous membrane or at the time of using the non-porous membrane. The cationic functional group may be a zwitterionic functional group in which both a cation and an anion are present. Therefore, the thermoplastic resin may have an anionic moiety. It is preferable that the thermoplastic resin does not have an anionic moiety.

Examples of the cationic functional group include a nitrogen-containing group. Examples of the nitrogen-containing group include a group containing an ammonium ion or a group capable of forming an ammonium ion. Here, the group capable of forming an ammonium ion refers to a group that is not ionized at the stage of the thermoplastic resin but forms an ionized body at the stage of forming the non-porous membrane or at the time of using the non-porous membrane. Examples of the group containing an ammonium ion and the group capable of forming an ammonium ion include a primary amino group, a secondary amino group, a tertiary amino group, a quaternary ammonium group, an imino group (-NH- group and =NH group), an amidino group, an imidino group, a hydrazino group, an amide group, an imide group, and a cyclic group containing a nitrogen atom, such as a pyridyl group. Examples of the zwitterionic functional group include a quaternary ammonium-containing group. Examples of the quaternary ammonium-containing group include a betaine group and a phosphocholine group. Among them, in the thermoplastic resin, a group capable of generating an ammonium ion after formation of the non-porous membrane is preferred, and a group capable of generating a quaternary ammonium group (quaternary ammonium group, imide group) is more preferred, from the viewpoint of exhibiting antibacterial properties and preventing scattering of saprophytes from the non-porous membrane.

When the thermoplastic resin is the copolymer, the copolymer preferably contains a structural unit derived from a monomer having a cationic functional group in a side chain. Examples of the monomer having a cationic functional group include a monomer having the nitrogen-containing group described above as a functional group. Examples of the monomer having the nitrogen-containing group described above as a functional group include an amide group-containing monomer, an amino group-containing monomer, and an imide group-containing monomer. Examples of the amide group-containing monomer include N,N-dialkyl(meth)acrylamides such as N,N-dimethyl(meth)acrylamide, N,N-diethyl(meth)acrylamide, N,N-dipropyl(meth)acrylamide, N,N-diisopropyl(meth)acrylamide, N,N-di(n-butyl)(meth)acrylamide, and N,N-di(t-butyl)(meth)acrylamide; N-alkyl(meth)acrylamides such as N-ethyl(meth)acrylamide, N-isopropyl(meth)acrylamide, N-butyl(meth)acrylamide, and N-n-butyl(meth)acrylamide; N-vinylacetamide; N-hydroxyalkyl(meth)acrylamides such as N-(2-hydroxyethyl)(meth)acrylamide, N-(2-hydroxypropyl)(meth)acrylamide, N-(1-hydroxypropyl)(meth)acrylamide, N-(3-hydroxypropyl)(meth)acrylamide, N-(2-hydroxybutyl)(meth)acrylamide, N-(3-hydroxybutyl)(meth)acrylamide, and N-(4-hydroxybutyl)(meth)acrylamide; N-alkoxyalkyl(meth)acrylamides such as N-methoxymethyl(meth)acrylamide, N-methoxyethyl(meth)acrylamide, and N-butoxymethyl(meth)acrylamide; N,N-dimethylaminopropyl(meth)acrylamide; and N-(meth)acryloylmorpholine. Examples of the amino group-containing monomer include substituted or unsubstituted amino group-containing (meth)acrylates such as aminoethyl (meth)acrylate, N,N-dimethylaminoethyl (meth)acrylate, and t-butylaminoethyl (meth)acrylate. Examples of the imide group-containing monomer include N-(meth)acryloyloxymethylenesuccinimide, N-(meth)acryloyl-6-oxyhexamethylenesuccinimide, N-(meth)acryloyl-8-oxyhexamethylenesuccinimide, N-cyclohexylmaleimide, N-isopropylmaleimide, N-laurylmaleimide, N-phenylmaleimide, N-methylitaconimide, N-ethylitaconimide, N-butylitaconimide, N-octylitaconimide, N-2-ethylhexylitaconimide, N-cyclohexylitaconimide, and N-laurylitaconimide. One type of the aforementioned monomers having a cationic functional group may be used alone, or two or more types thereof may be used in combination.

The content proportion of the monomer having a cationic functional group is preferably from 0.5 mol% to 10 mol%, more preferably from 1 mol% to 7 mol%, and still more preferably from 2 mol% to 5 mol% relative to the entire monomer components constituting the copolymer. Adjusting the content proportion of the monomer having a cationic functional group within this range makes it possible to exhibit a repulsive force with the scale component, and adhesion and deposition of the scale component onto the non-porous membrane can be suppressed.

The copolymer may contain a structural portion derived from a crosslinking agent. The crosslinking agent is not particularly limited as long as it is a compound capable of crosslinking with the side chain of the monomer constituting the copolymer. For example, a bifunctional compound having two reactive functional groups is preferred, and a crosslinking agent having three or more functional groups may be used from the viewpoint of increasing the range of the density of crosslinking in the polymer and adjusting the mechanical properties. Examples of the crosslinking agent include epoxy group-containing compounds having two or more functional groups, and isocyanate group-containing compounds having two or more functional groups. In the copolymer described above, the crosslinking agent particularly preferably contains an epoxy group-containing compound having two or more functional groups, from the viewpoint that a quaternary ammonium ion can be generated after crosslinking reaction with a functional group formed in a side chain.

Examples of the epoxy group-containing compound include bisphenol A and epichlorohydrin-type epoxy compounds, polyethylene glycol diglycidyl ether, glycerin diglycidyl ether, glycerin triglycidyl ether, 1,6-hexanediol diglycidyl ether, trimethylolpropane triglycidyl ether, diglycidylaniline, N,N,N',N'-tetraglycidyl-m-xylenediamine (for example, trade name "TETRAD-X", available from Mitsubishi Gas Chemical Company), and 1,3-bis(N,N-diglycidylaminomethyl)cyclohexane (for example, trade name "TETRAD-C", available from Mitsubishi Gas Chemical Company).

The amount of the crosslinking agent to be used is preferably from 1 part by mole to 60 parts by mole, more preferably from 2 parts by mole to 30 parts by mole, and still more preferably from 4 parts by mole to 15 parts by mole, relative to the total amount (100 parts by mole) of the side chains capable of reacting in the copolymer. Adjusting the amount of the crosslinking agent to be used within this range makes it possible to easily form a water-conducting path in the non-porous membrane, and the non-porous membrane is easily provided with excellent moisture permeability.

The weight average molecular weight of the thermoplastic resin is not particularly limited, but is preferably from 20000 to 2000000, more preferably from 30000 to 1500000, still more preferably from 50000 to 1000000, and particularly preferably from 70000 to 500000. The weight average molecular weight refers to a value measured by gel permeation chromatography (GPC) and calculated in terms of polystyrene.

The thickness of the non-porous membrane is preferably from 0.5 µm to 5 µm, and more preferably from 1 µm to 4 µm. When the thickness is 0.5 µm or more, good membrane formability is achieved, which can further improve moisture permeability while improving the gas barrier property. When the thickness is 5 µm or less, a thin membrane is readily formed, and the humidifier can be downsized while maintaining sufficient moisture permeability, resulting in excellent economic efficiency.

The non-porous membrane may contain an additional component other than the thermoplastic resin as long as the effects of the laminate are not impaired.

The non-porous membrane may contain, as the additional component, for example, an anti-blocking agent, a release agent, a preservative, or a leveling agent. The content of the additional component is preferably from 0.1 parts by mass to 10 parts by mass, more preferably from 0.15 parts by mass to 3 parts by mass, and particularly preferably from 0.2 parts by mass to 2 parts by mass relative to the entire amount (100 parts by mass) of the thermoplastic resin.

Since the copolymer has a hydrophilic moiety and a hydrophobic moiety, the non-porous membrane has a structure in which the hydrophilic moiety and the hydrophobic moiety are phase-separated at the surface. The maximum diameter of the hydrophilic moiety at the surface of the non-porous membrane is preferably 50 nm or less, more preferably 20 nm or less. When the maximum diameter of the hydrophilic moiety is 50 nm or less, a substance having a size larger than 50 nm is less likely to pass through the non-porous membrane, and the non-porous membrane can be used as a barrier film that does not allow a substance (for example, virus) having a size of 50 nm or more to pass through. The diameter of the hydrophilic moiety is determined by the following method. The diameter of the hydrophilic moiety can be calculated as a circle-equivalent diameter by converting a portion having a high adsorption force (hydrophilic moiety) and a portion having a low adsorption force (hydrophobic moiety) into numerical values by an adhesion force using an adhesion force measurement mode of a scanning probe microscope (SPM) and processing the values with image analysis software. The maximum diameter corresponds to the largest diameter among the diameters (circle-equivalent diameters) of the hydrophilic moieties calculated as described above.

The moisture-permeable membrane may be a porous membrane. The porous membrane is preferably a hydrophilic porous membrane. When the porous membrane is a hydrophilic porous membrane, the porous membrane easily becomes compatible with water and easily exhibits moisture permeability.

Examples of the material for forming the hydrophilic porous membrane include organic materials such as cellulose-based resins, polyamide resins, polyimide resins, and polyamideimide resins, and inorganic materials such as metals, glasses, and ceramics. Among them, an organic material is preferred, from the viewpoint that the moisture-permeable membrane can be formed on the porous reinforcing material at a relatively low temperature, and from the viewpoint of excellent moisture permeability. The aforementioned material may be in the form of fibers such as metal fibers or inorganic fibers. One type of the aforementioned materials for forming the hydrophilic porous membrane may be used alone, or two or more types thereof may be used.

Examples of the hydrophilic porous membrane include a resin porous membrane, an inorganic porous membrane, a metal porous membrane, and a fibrous base material.

The average pore diameter of the porous membrane is preferably from 0.1 µm to 10 µm. The porosity of the porous membrane is preferably from 40 vol% to 90 vol%. When the average pore diameter and/or the porosity is within the above range, it becomes easy to efficiently transmit only water vapor while forming a stable membrane structure.

The thickness of the porous membrane is preferably different from the thickness of the porous reinforcing material. The thickness of the porous membrane is preferably smaller than that of the porous reinforcing material. With such a configuration, the moisture permeability is readily improved. The thickness of the porous membrane is preferably from 0.5 µm to 15 µm, and more preferably from 1 µm to 12 µm.

The moisture-permeable membrane is preferably a layer formed by coating. The moisture-permeable membrane can be readily formed by coating.

### Porous reinforcing material

The porous reinforcing material is an element serving as a support for the moisture-permeable membrane and preferably has excellent moisture permeability.

The material for forming the porous reinforcing material may be either a hydrophilic material or a hydrophobic material, but is preferably a hydrophobic material. When the hydrophobic material is used, the composition for forming the moisture-permeable membrane does not penetrate into the porous reinforcing material at the time of applying the composition, and thus a lead base material is not required for preventing the composition from flowing off the surface of the porous reinforcing material opposite to the surface on which the coating membrane is formed.

Examples of the material for forming the porous reinforcing material include organic materials such as a polyolefin-based resin, a cellulose-based resin, a polycarbonate resin, a polyamide resin, a polyimide resin, a polyamideimide resin, and a fluorine-based resin; and inorganic materials such as metals, glasses, and ceramics. Among them, an organic material is preferred, and the organic material is particularly preferably a polyolefin-based resin, from the viewpoint that the moisture-permeable membrane can be formed on the porous reinforcing material at a relatively low temperature, and from the viewpoint of excellent moisture permeability and water resistance. The aforementioned material may be in the form of fibers such as metal fibers or inorganic fibers. One type of the aforementioned materials for forming the porous reinforcing material may be used alone, or two or more types thereof may be used.

Examples of the porous reinforcing material include a resin porous membrane, an inorganic porous membrane, a metal porous membrane, and a fibrous base material.

The polyolefin-based resin is a polymer containing an olefin as an essential monomer component (including an olefin-based elastomer), that is, a polymer containing at least a constituent unit derived from an olefin in a molecule (in one molecule). The olefin is not particularly limited, and examples thereof include α-olefins such as ethylene, propylene, 1-butene, and 4-methyl-1-pentene.

Examples of the polyolefin-based resin include a polymer containing ethylene as an essential monomer component (polyethylene-based resin), a polymer containing propylene as an essential monomer component (polypropylene-based resin), an ionomer, and an amorphous cyclic olefin-based polymer.

The porosity of the porous reinforcing material is not particularly limited, but is preferably from 30 vol% to 90 vol%, more preferably from 40 vol% to 70 vol%. When the porosity is 30 vol% or more, the moisture permeability is further improved. When the porosity is 90 vol% or less, the performance for supporting the moisture-permeable membrane is further improved.

The thickness of the porous reinforcing material is not particularly limited, but is preferably 5 µm or more, and more preferably 10 µm or more from the viewpoint of being able to sufficiently support the moisture-permeable membrane. The thickness of the porous reinforcing material is preferably 50 µm or less, and more preferably 30 µm or less from the viewpoint of excellent moisture permeability and in consideration of economic efficiency.

The surface of the porous reinforcing material on which the moisture-permeable membrane is provided (for example, the surface 11a illustrated in FIG. 1) is preferably subjected to a hydrophilization treatment from the viewpoint of facilitating formation of the moisture-permeable membrane. In particular, when a hydrophobic material is used as the material for forming the porous reinforcing material, the hydrophilization treatment is preferably performed. Examples of the hydrophilization treatment include corona discharge treatment and plasma treatment. Such a hydrophilization treatment makes it possible to generate a carboxy group, a hydroxyl group, or a carbonyl group on the surface of the porous reinforcing material, and the composition for forming the moisture-permeable membrane easily wets and spreads on the surface of the porous reinforcing material, thereby facilitating formation of the moisture-permeable membrane. This also improves the adhesion between the porous reinforcing material and the moisture-permeable membrane. When the porous reinforcing material formed of a hydrophobic base material is stored in the form of a wound body, one surface and the other surface of the porous reinforcing material are in contact with each other in the wound body. However, since one surface (hydrophilic surface) and the other surface (hydrophobic surface) are in contact with each other, blocking can be suppressed.

The surface tension of the surface of the porous reinforcing material on which the moisture-permeable membrane is formed is preferably from 35 dyn/cm to 55 dyn/cm, more preferably from 37 dyn/cm to 50 dyn/cm. When the surface tension is 35 dyn/cm or more, the composition for forming the moisture-permeable membrane can be easily applied, and the moisture-permeable membrane can be easily formed. When the surface tension is 55 dyn/cm or less, the composition for forming the moisture-permeable membrane does not excessively wet or spread, and the moisture-permeable membrane can be easily formed on the surface of the porous reinforcing material. When the surface of the porous reinforcing material is hydrophilized, the surface on which the moisture-permeable membrane is to be formed is the hydrophilized surface.

The surface tension of the inside of the porous reinforcing material (i.e., the inside being the region where the moisture-permeable membrane is not formed) is preferably less than 35 dyn/cm, more preferably 33 dyn/cm or less. When the surface tension is less than 35 dyn/cm, the composition for forming the moisture-permeable membrane is prevented from penetrating to the inside of the porous reinforcing material, and the moisture-permeable membrane can be easily formed on the surface of the porous reinforcing material. When the surface of the porous reinforcing material is subjected to a hydrophilization treatment, the inside of the porous reinforcing material corresponds to the region not subjected to the hydrophilization treatment. The surface tension of the inside can be determined by measuring the surface tension of a cross-section obtained by cutting the porous reinforcing material.

### Adhesive

In the humidification element, the frame and the laminate are preferably bonded to each other with an adhesive. The frame and the laminate may be directly fused together by a known or commonly used method. When the frame and the laminate are bonded to each other, breakage, swelling, and the like of the laminate can be suppressed, and the moisture permeation performance can be easily exhibited for a long period of time. In the humidification element 1 illustrated in FIG. 1, the moisture-permeable membrane 12 side of the laminate 10 is bonded to the frame 30 via the adhesive 20.

From the viewpoint of bonding between the moisture-permeable membrane and the frame, the adhesive is preferably an adhesive containing a modified polyolefin-based resin, more preferably an adhesive containing an acid-modified polyolefin-based resin. One type of adhesive may be used alone, or two or more types of adhesives may be used.

### Method for producing laminate

The laminate can be produced by forming the moisture-permeable membrane on at least one surface of the porous reinforcing material by a known or commonly used method. For example, the moisture-permeable membrane may be directly formed on one surface of the porous reinforcing material. Alternatively, the moisture-permeable membrane may be temporarily formed on another support, and then the moisture-permeable membrane may be transferred (bonded) to one surface of the porous reinforcing material, to form the moisture-permeable membrane on the porous reinforcing material. Among these methods, the former method is preferred from the viewpoint of excellent adhesion between the moisture-permeable membrane and the porous reinforcing material.

The surface of the porous reinforcing material on the side where the moisture-permeable membrane is to be provided may be subjected to a hydrophilization treatment. Examples of the hydrophilization treatment include those described above.

The moisture-permeable membrane can be formed by applying (coating) a composition for forming the moisture-permeable membrane on the porous reinforcing material or the other support described above, and then removing the solvent from the resultant coating membrane by heating or the like.

Since blocking is suppressed by subjecting the porous reinforcing material to the hydrophilization treatment, the laminate can be produced by a roll-to-roll process in which a moisture-permeable membrane is formed on the porous reinforcing material produced preliminarily in the form of a wound body, and then the resultant laminate is brought into a wound body again.

The aforementioned composition can be produced by a known or commonly used method. For example, the composition can be produced by dissolving or dispersing the aforementioned copolymer in a solvent, and mixing the solution or the dispersion with an additive such as a preservative as necessary. The solvent is preferably water and/or a water-soluble solvent. When water or a water-soluble solvent is used, it is presumed that the copolymer is dispersed in the composition in a core-shell form including a hydrophobic moiety on the inner side and a hydrophilic moiety on the outer side. It is presumed that the use of such a composition makes it possible to phase-separate the hydrophilic moiety and the hydrophobic moiety to form a moisture-permeable membrane in a state of having a water-conducting path when the coating membrane is dried, and the hydrophobic moieties are strongly bonded to each other, whereby the water resistance is further improved.

Examples of the water-soluble solvent include water-soluble aliphatic alcohols such as methanol, ethanol, n-propanol, and i-propanol; and glycol ethers such as ethylene glycol monomethyl ether, ethylene glycol monobutyl ether, propylene glycol monomethyl ether, and propylene glycol monoethyl ether. One type of the aforementioned water-soluble solvents may be used alone, or two or more types thereof may be used.

The proportion (concentration) of the copolymer in the composition in which the copolymer is dissolved or dispersed is not particularly limited, but is preferably from 0.5 to 5 mass%, more preferably from 1 to 4 mass%, and still more preferably from 1.5 to 3 mass%. When the concentration is 5 mass% or less, the thickness of the coating layer increases, and thus the thickness of the moisture-permeable membrane after drying becomes more uniform. This makes it possible to form a moisture-permeable membrane having excellent gas barrier properties and a further reduced thickness, resulting in further improved moisture permeability. In addition, when the concentration is within the above range, it is easy to form a moisture-permeable membrane having excellent coating properties, moisture permeability, and gas barrier properties.

A known coating method may be used for the application (coating) of the composition. For example, a coater such as a gravure roll coater, a reverse roll coater, a kiss roll coater, a dip roll coater, a bar coater, a knife coater, a spray coater, a comma coater, or a direct coater may be used. The moisture-permeable membrane is readily formed through such a coating method.

The heating temperature at the time of removing the solvent from the coating membrane is preferably from 35°C to 90°C, more preferably from 40°C to 85°C, and still more preferably from 45°C to 80°C. A proper time can be appropriately adopted for the heating, and the heating time is, for example, from 5 seconds to 20 minutes, preferably from 5 seconds to 10 minutes, and more preferably from 10 seconds to 5 minutes. Since the moisture-permeable membrane can be formed at a low temperature of 90°C or lower (in particular, 80°C or lower) using the composition, the membrane is easily formed, and a polyolefin-based resin having excellent moisture permeability can be used as the porous reinforcing material.

The laminate in which the moisture-permeable membrane is formed on at least one surface of the porous reinforcing material by the above-described method has excellent moisture permeability. Since the laminate has a structure in which a hydrophilic moiety and a hydrophobic moiety are phase-separated, the laminate can also be used as a barrier film having moisture permeability. When the diameter of the hydrophilic moiety is small, the barrier film having moisture permeability allows a small hydrophilic substance (for example, water vapor) to pass through the hydrophilic moiety and prevents a large substance (for example, virus) from passing through the hydrophilic moiety, and thus these substances can be separated from each other.

### Method for producing humidification element

A humidification element can be produced by disposing the laminate on the air passage side of the frame. It is preferable that a bag-shaped water-holding container is formed by covering the frame with the laminate.

The frame may be a plate-like or bag-shaped frame formed by extrusion molding, a plate-like frame formed by injection molding, or a bag-shaped structure formed by bonding two or more plate-like frames. A hole may be provided after production of the bag-shaped frame, or a frame provided with a hole in advance may be produced.

It is preferable that a part or the whole of a contact portion between the laminate and the frame is bonded. The method for bonding of the laminate to the frame is not particularly limited, and the bonding can be performed by an adhesion method using the aforementioned adhesive, or a fusion method such as ultrasonic fusion, high-frequency fusion, or thermal fusion.

The humidification element in which the laminate is disposed on the air passage side of the frame can be produced by the method described above. In the humidification element, the laminate is disposed on the air passage side of the frame structure. Thus, liquid water passing through the water passage side of the humidification element is absorbed in the form of water vapor by the laminate and is diffused in the laminate, and the water vapor can be released from the entire laminate to the air passage side.

A humidifier can be produced by mounting a plurality of humidification elements each including the laminate disposed on the air passage side of the frame. Since such a humidifier includes a humidification element having improved humidification performance as compared with a known one, the humidifier can be downsized and can exhibit comparable performance, and is also excellent in terms of cost.

Therefore, the humidifier can be suitably used for applications such as an air conditioner, a ventilator, and an air purifier.

Each aspect disclosed in the present specification can be combined with any other feature disclosed herein. Each of the configurations, combinations thereof, or the like in each embodiment are an example, and additions, omissions, replacements, and other changes of the configurations may be made as appropriate without departing from the spirit of the present disclosure. Each aspect of the invention according to the present disclosure is not limited by the embodiments but is limited only by the claims.

In a known humidification element, the laminate is formed on the water passage side of the frame, and water vapor cannot be released to the outside from a portion where the frame and the laminate are in contact with each other. Thus, all surfaces of the laminate cannot be effectively used, and the humidification performance is not satisfactory. In contrast, in the humidification element of the present disclosure, the laminate including the moisture-permeable membrane is formed on the air passage side of the frame. Thus, the absorbed water vapor can be diffused in the laminate and released from the entire surface of the laminate, and the humidification performance can be further improved.

Hereinafter, variations of the invention according to the present disclosure will be described.

### [Appendix 1]

A humidification element including:
a laminate including a porous reinforcing material and a moisture-permeable membrane laminated on at least one surface of the porous reinforcing material; and
a frame, wherein
the laminate is disposed on an air passage side of the frame.

### [Appendix 2]

The humidification element according to Appendix 1, wherein the laminate forms a bag-shaped water-holding container in such a manner as to cover the air passage side of the frame.

### [Appendix 3]

The humidification element according to Appendix 1 or 2, wherein, in the laminate, the moisture-permeable membrane is disposed on the frame side of the porous reinforcing material.

### [Appendix 4]

The humidification element according to any one of Appendices 1 to 3, wherein the moisture-permeable membrane is a non-porous membrane.

### [Appendix 5]

The humidification element according to Appendix 4, wherein the non-porous membrane contains a thermoplastic resin including a cationic moiety, and the cationic moiety contains a group containing an ammonium ion or a group capable of forming an ammonium ion.

### [Appendix 6]

The humidification element according to Appendix 4 or 5, wherein the non-porous membrane contains a thermoplastic resin including a hydrophilic moiety, and the hydrophilic moiety contains a constituent unit represented by Formula (1) described below: 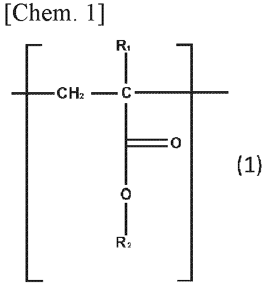 (wherein R₁ and R₂ each independently represent a hydrogen atom or a methyl group).

### [Appendix 7]

The humidification element according to any one of Appendices 4 to 6, wherein the non-porous membrane contains a thermoplastic resin including a hydrophobic moiety, and the hydrophobic moiety contains a constituent unit represented by Formula (2) and/or Formula (3) described below: 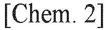 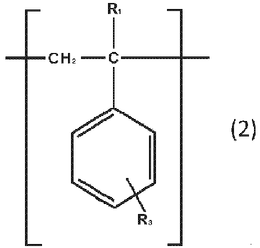 (wherein R₁ represents a hydrogen atom or a methyl group, and R₃ represents an alkyl group having from 1 to 2 carbons) 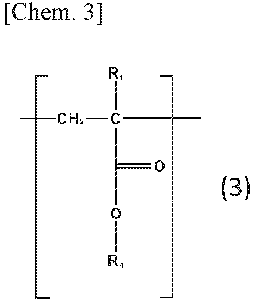 (wherein R₁ represents a hydrogen atom or a methyl group, and R₄ represents a branched alkyl group having 3 or more carbons).

### [Appendix 8]

The humidification element according to any one of Appendices 1 to 3, wherein the moisture-permeable membrane is a hydrophilic porous membrane.

### [Appendix 9]

The humidification element according to Appendix 8, wherein the hydrophilic porous membrane and the porous reinforcing material have different thicknesses.

### [Appendix 10]

The humidification element according to any one of Appendices 1 to 9, wherein the laminate and the frame are bonded to each other by adhesion or fusion.

### [Appendix 11]

The humidification element according to any one of Appendices 1 to 9, wherein the laminate is bonded to the frame with an adhesive.

### [Appendix 12]

The humidification element according to any one of Appendices 1 to 11, wherein the moisture-permeable membrane is coated to cover at least one surface of the porous reinforcing material.

### [Appendix 13]

A humidifier including the humidification element described in any one of Appendices 1 to 12.

### [Appendix 14]

An air conditioner including the humidifier described in Appendix 13.

### [Appendix 15]

A humidifier including the humidifier described in Appendix 13.

### [Appendix 16]

An air purifier including the humidifier described in Appendix 13.

### Reference Signs List

1 Humidification element
10 Laminate
11 Porous reinforcing material
11a One surface of porous reinforcing material
12 Moisture-permeable membrane
20 Adhesive
30 Frame
31 Hole

## Claims

1. A humidification element comprising:
a laminate including a porous reinforcing material and a moisture-permeable membrane laminated on at least one surface of the porous reinforcing material; and
a frame, wherein
the laminate is disposed on an air passage side of the frame.

2. The humidification element according to claim 1, wherein the laminate forms a bag-shaped water-holding container in such a manner as to cover the air passage side of the frame.

3. The humidification element according to claim 1 or 2, wherein, in the laminate, the moisture-permeable membrane is disposed on the frame side of the porous reinforcing material.

4. The humidification element according to claim 1 or 2, wherein the moisture-permeable membrane is a non-porous membrane.

5. The humidification element according to claim 4, wherein
the non-porous membrane contains a thermoplastic resin including a cationic moiety, and
the cationic moiety contains a group containing an ammonium ion or a group capable of forming an ammonium ion.

6. The humidification element according to claim 4, wherein
the non-porous membrane contains a thermoplastic resin including a hydrophilic moiety, and
the hydrophilic moiety contains a constituent unit represented by Formula (1): 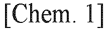 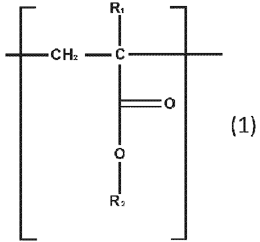
wherein R₁ and R₂ each independently represent a hydrogen atom or a methyl group.

7. The humidification element according to claim 4, wherein
the non-porous membrane contains a thermoplastic resin including a hydrophobic moiety, and
the hydrophobic moiety contains a constituent unit represented by Formula (2) and/or Formula (3): 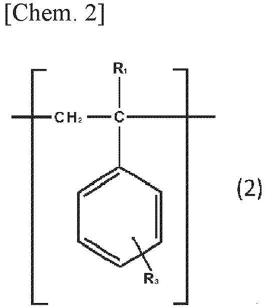
wherein R₁ represents a hydrogen atom or a methyl group, and R₃ represents an alkyl group having from 1 to 2 carbons, 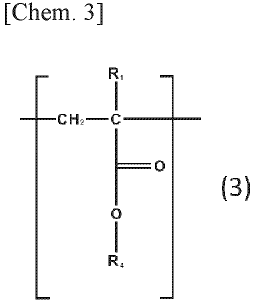
wherein R₁ represents a hydrogen atom or a methyl group, and R₄ represents a branched alkyl group having 3 or more carbons.

8. The humidification element according to claim 1 or 2, wherein the moisture-permeable membrane is a hydrophilic porous membrane.

9. The humidification element according to claim 8, wherein the hydrophilic porous membrane and the porous reinforcing material have different thicknesses.

10. The humidification element according to claim 1 or 2, wherein the laminate and the frame are bonded to each other by adhesion or fusion.

11. The humidification element according to claim 1 or 2, wherein the laminate is bonded to the frame with an adhesive.

12. The humidification element according to claim 1 or 2, wherein the moisture-permeable membrane is coated to cover at least one surface of the porous reinforcing material.

13. A humidifier comprising the humidification element described in claim 1 or 2.

14. An air conditioner comprising the humidifier described in claim 13.

15. A ventilator comprising the humidifier described in claim 13.

16. An air purifier comprising the humidifier described in claim 13.
